# EUROPÄISCHE PATENTSCHRIFT

(11) **EP 0 535 171 B1**
(45) Veröffentlichungstag und Bekanntmachung des Hinweises auf die Patenterteilung: **04.05.1994**
(21) Anmeldenummer: 92902891.8
(22) Anmeldetag: 17.01.1992
(51) Int. Cl.: G01L 3/12, G01L 3/14, G01D 1/16

(54) **AUSWERTUNGSEINRICHTUNG FÜR EINE AUF EINER DREHBAREN WELLE ERFASSTE MESSGRÖSSE**
DEVICE FOR EVALUATING FOR A MEASURED QUANTITY OBTAINED ON A ROTATING SHAFT
DISPOSITIF D'EVALUATION POUR UNE GRANDEUR DE MESURE DETERMINEE SUR UN ARBRE ENTRAINE EN ROTATION

(30) Priorität: 19.02.1991 DE 4105120; 28.03.1991 DE 4110397
(43) Veröffentlichungstag der Anmeldung: 07.04.1993
(73) Patentinhaber: GLONNER, Horst, D-82152 Planegg (DE)
(72) Erfinder: GLONNER, Horst, D-82152 Planegg (DE)
(74) Vertreter: Schoppe, Fritz, Dipl.-Ing.
(86) Internationale Anmeldenummer: DE9200033
(87) Internationale Veröffentlichungsnummer: WO9215001

(56) Entgegenhaltungen:
- EP-A- 0 327 446
- Patent Abstracts of Japan, vol. 11, no. 37 (P-543), 4 February 1987 & JP-A-61 207 940
- Patent Abstracts of Japan, vol. 4, no. 142 (P-030), 7 October 1980, & JP-A-55 090 828

## Beschreibung

Die vorliegende Erfindung betrifft eine Auswertungseinrichtung für eine auf einer drehbaren Welle erfaßte Meßgröße mit einer Drehwinkelumformeinrichtung zur Umformung der erfaßten Meßgröße in eine von dieser abhängige Drehwinkelgröße und mit einer Erfassungseinrichtung für die Drehwinkelgröße, die eine erste Zählerschaltung und eine relativ zu der Drehwinkelumformeinrichtung drehbare Sensoreinrichtung umfaßt, die die Drehwinkelgröße erfaßt und die aus dieser die Meßgröße ableitet, gemäß dem Oberbegriff des Patentanspruchs 1.

Ferner betrifft die Erfindung eine Drehmomenterfassungseinrichtung zur Ermittlung des zwischen einem eingangsseitigen Wellenelement und einem ausgangsseitigen Wellenelement übertragenen Drehmomentes, mit einer elastischen Verbindungsvorrichtung zwischen den Wellenelementen, die eine von dem übertragenen Drehmoment abhängige relative Winkelauslenkung der Wellenelemente gestattet, mit einer mit den beiden Wellenelementen verbundenen Drehwinkelumformeinrichtung zur Erzeugung einer von der Winkelauslenkung der Wellenelemente abhängigen, erfaßbaren Drehwinkelgröße und mit einer Erfassungs- und Auswertungseinrichtung für die Drehwinkelgröße, die eine erste Zählerschaltung und eine relativ zu der Drehwinkelumformeinrichtung drehbare Sensoreinrichtung umfaßt und die die Drehwinkelgröße erfaßt und aus dieser das Drehmoment ableitet, gemäß dem Oberbegriff des Patentanspruchs 2.

Aus der DE 31 42 603 A1 ist eine gattungsgemäße Auswertungseinrichtung bekannt, bei der die an der drehbaren Welle erfaßte Meßgröße das auf die Welle einwirkende Drehmoment ist. Die bekannte Drehmomenterfassungseinrichtung hat eine elastische Verbindungsvorrichtung zwischen einem eingangsseitigen und einem ausgangsseitigen Wellenelement, die eine von dem übertragenen Drehmoment abhängige relative Winkelauslenkung der Wellenelemente gestattet, wobei die Drehwinkelumformeinrichtung durch zwei gegeneinander verdrehbare Scheiben mit jeweils einer Vielzahl von Ausschnitten gebildet ist, die an einem ersten und zweiten Radiusbereich der Scheiben vorgesehen sind. Die Erfassungseinrichtung umfaßt zwei Leuchtdioden zur ständigen Abgabe von Licht, die auf einer Seite der beiden Scheiben angeordnet sind, sowie zwei Phototransistoren, die auf der anderen Seite der beiden Scheiben angeordnet sind. Die Anzahl der Lichtpulse, die von der ersten Leuchtdiode durch Ausschnitte der beiden Scheiben zu dem ersten Phototransistor während einer Umdrehung der Welle übertragen werden, hängt von der Überdeckungsstellung der jeweiligen Ausschnitte der beiden Scheiben ab, wobei die Lage der Ausschnitte so bestimmt ist, daß die Anzahl der übertragenen Lichtpulse pro Umdrehung von der Winkelauslenkung der Wellenelemente abhängt. Das zweite LeuchtdiodenPhototransistor-Paar dient zur Erzeugung von Referenzpulsen. Die erzeugten Pulssignale werden einem Zähler zugeführt, der von den Ausgangssignalen des ersten Leuchtdioden-Phototransistor-Paares hochgezählt wird und von dem Ausgangssignal des anderen Leuchtdioden-Phototransistor-Paares rückgesetzt wird. Die mit einer derartigen Drehmomentmeßeinrichtung erfaßbare Meßgenauigkeit bzw. Auflösung ist durch die Anzahl und Fertigungsgenauigkeit der Vielzahl von Fensteröffnungen in den beiden Scheiben beschränkt. Für genaue Drehmomentmessungen ist diese bekannte Drehmomenterfassungseinrichtung bei noch hinnehmbarer Größe der beiden Scheiben und hinnehmbarer Anzahl der erforderlichen Fenster somit nicht verwendbar. Zur Erfassung anderer Größen auf sich drehenden Wellen als des Drehmomentes ist die bekannte Auswertungseinrichtung gleichfalls nicht geeignet.

Allgemein besteht jedoch in vielen technischen Anwendungsfällen ein Bedarf, eine auf einer drehbaren Welle erfaßte Meßgröße, die beispielsweise eine Temperatur, ein Druck, eine Kraft oder jede andere interessierende Größe sein kann, auf einfache und dennoch genaue Weise zu erfassen und durch eine üblicherweise stillstehende Auswertungseinrichtung zu messen oder auszuwerten.

Nur beispielsweise wird darauf hingewiesen, daß es im Kfz-Bereich wünschenswert wäre, mit niedrigem Aufwand den Luftdruck in den Reifen eines Fahrzeuges zu erfassen und dem Fahrer im Armaturenbrettbereich zur Anzeige zu bringen. Bislang sind derartige Systeme zur Auswertung von auf einer drehbaren Welle erfaßten Meßgröße außerordentlich aufwendig und daher in aller Regel nur für Prototypen geeignet. Typische Systeme umfassen auf der drehbaren Welle angeordnete optische oder elektronische Sendesysteme, mit denen Signale über die erfaßte Meßgröße an ein stillstehendes Empfangssystem übertragen werden.

Die JP-A-61207940 betrifft ein Drehmomentmeßgerät, das zwischen einer treibenden und einer getriebenen Welle ein Torsions-Element umfaßt, durch das zwei an den Wellen befestigte Schlitzscheiben entsprechend des Drehmomentes gegeneinander winkelmäßig versetzt werden können. Durch eine optische Faser, die an eine Lichtquelle zur Erzeugung eines kontinuierlichen Lichtes angeschlossen ist, wird ständiges, ununterbrochenes Licht abgegeben, welches durch die Schlitze der Schlitzscheiben auf eine Empfangsfaser fällt, die über ein Lichtempfangselement ein elektrisches Pulssignal erzeugt, dessen Pulslänge der zeitlichen Dauer des jeweils empfangenen Lichtes entspricht. Diese Zeitdauer wird in einem Zähler, der von einer Pulsquelle mit Pulsen versorgt wird, gezählt. Das so gemessene Drehmoment wird durch Drehzahlschwankungen der Welle verfälscht.

Ausgehend von diesem Stand der Technik liegt der vorliegenden Erfindung die Aufgabe zugrunde, eine Auswertungseinrichtung für eine auf einer drehbaren Well erfaßte Meßgröße zu schaffen, die trotz einfacher Struktur unabhängig von der Drehzahl eine hohe Auflösung bei vollständig digitaler Meßtechnik erreicht.

Diese Aufgabe wird durch eine Auswertungseinrichtung gemäß Patentanspruch 1 gelöst.

Ferner liegt der vorliegenden Erfindung die Aufgabe zugrunde, eine Drehmomenterfassungseinrichtung der eingags genannten Art zu schaffen, die trotz einfacher Struktur unabhängig von der Drehzahl eine hohe Auflösung bei vollständig digitaler Meßtechnik erreicht.

Diese Aufgabe wird durch eine Drehmomenterfassungseinrichtung gemäß Patentanspruch 2 gelöst.

Bevorzugte Weiterbildungen der Erfindung sind in den Unteransprüchen angegeben.

Nachfolgend werden unter Bezugnahme auf die beiliegenden Zeichnungen zwei bevorzugte Ausführungsbeispiele der vorliegenden Erfindung näher erläutert. Es zeigen:
- Fig. 1: eine schematische Seitenansicht eines Kraftfahrzeugrades mit einem tangential angeordneten Druckmeßkolben für den Reifenluftdruck als ein erster möglicher Bestandteil einer erfindungsgemäßen Auswertungseinrichtung;
- Fig. 2: ein Blockdiagramm der erfindungsgemäßen Auswertungseinrichtung;
- Fig. 3: eine Bimetall-Temperaturmeßvorrichtung für eine Bremstrommel als ein zweiter möglicher Bestandteil der erfindungsgemäßen Auswertungseinrichtung;
- Fig. 4: ein drittes Ausführungsbeispiel der erfindungsgemäßen Auswertungseinrichtung in Form einer Drehmomenterfassungseinrichtung; und
- Fig. 5: ein viertes Ausführungsbeispiel der erfindungsgemäßen Auswertungseinrichtung in Form einer Drehmomenterfassungseinrichtung.

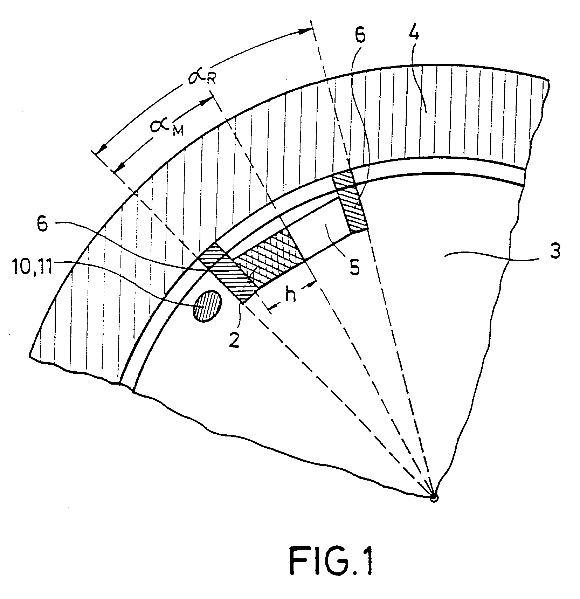

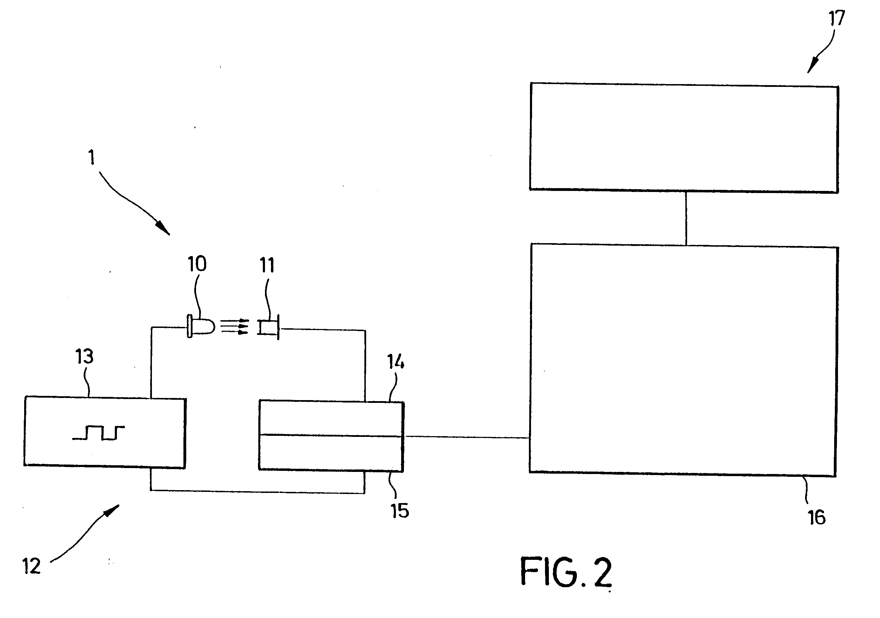

Nachfolgend wird unter Bezugnahme auf die Fig. 1 und 2 eine erste Ausführungsform der erfindungsgemäßen Auswertungseinrichtung für eine auf einer drehbaren Welle erfaßte Meßgröße erläutert, welche in ihrer Gesamtheit mit dem Bezugszeichen 1 bezeichnet ist.

Ein erster wesentlicher Bestandteil der erfindungsgemäßen Auswertungseinrichtung 1 besteht in einer Drehwinkelumformeinrichtung zur Umformung der erfaßten Meßgröße in eine Drehwinkelgröße, die von der erfaßten Meßgröße abhängig ist. Bei dem Anwendungsbeispiel gemäß Fig. 1, bei dem es um die Luftdruckmessung bei Kraftfahrzeugreifen geht, hat die Drehwinkelumformeinrichtung die Gestalt eines Druckmeßkolbens 2, der an einem Fahrzeugrad 3 im wesentlichen tangential zu einem Reifen 4 in einem zylindrischen Schauglas 5 angeordnet ist. Der Hub des Druckmeßkolbens 2 ist abhängig vom Reifendruck. Durch den vom Kolben eingenommenen Bereich bzw. dessen Hub wird aufgrund der tangentialen Ausrichtung des Druckmeßkolbens 2 ein Meßwinkel α_{M} festgelegt, der in erster Linie proportional zum Reifendruck ist.

Ein Referenzwinkel α_{R}, der bei dem gezeigten Beispielsfall durch den Tangentialabstand von Gehäusebefestigungsteilen 6 des Druckmeßkolbens 2 festgelegt ist, kann in Abweichung von dem gezeigten Ausführungsbeispiel durch jede andere Referenzwinkelgröße ersetzt sein, wobei hierzu auch eine einzige Marke am Kreisumfang in Betracht kommt, wenn der Referenzwinkel 360 Grad betragen soll.

Ein Infrarot-Sendeelement 10 mit einem zugeordneten Empfangselement 11 sind derart drehfest gegenüber dem Fahrzeugrad 3 angeordnet, daß durch das Sende- und Empfangselement 10, 11 der Meßwinkel α_{M} und der Referenzwinkel α_{R} detektierbar sind.

In Abweichung zu dem gezeigten Ausführungsbeispiel gemäß Fig. 1 können als Sende- und Empfangselement 10, 11 auch optisch oder magnetisch arbeitende Elemente verwendet werden.

Vorzugsweise wird man jedoch für den in Fig. 1 gezeigten Anwendungsfall Infrarotlicht einsetzen, wobei hier das Sendeelement 10 und das Empfangselement 11 entweder in Axialrichtung beidseitig des Druckmeßkolbens 2 zur Winkelerfassung durch Lichtunterbrechung oder gleichseitig bezüglich des Druckmeßkolbens 2 zur Winkelerfassung durch Lichtreflektion angeordnet sind.

Wie in Fig. 2 gezeigt ist, umfaßt die Auswertungseinrichtung eine an das Sendeelement 10 sowie an das Empfangselement 11 angeschlossene Erfassungseinrichtung 12, die eine erste Pulssignalquelle 13 umfaßt.

Bei einer ersten Ausführungsform der Erfindung dient diese Pulssignalquelle 13 zur Ansteuerung des Sendeelementes 10, so daß das Sendeelement 10 ein Pulssignal in Form eines gepulsten Infrarotlichtes abgibt. Ferner umfaßt die Erfassungseinrichtung 12 einen ersten Zähler 14, der dem Empfangselement 11 nachgeschaltet ist. Bei dieser Ausgestaltung der Erfindung, bei der das Sendeelement 10 mit einem Pulssignal beaufschlagt wird, zählt also die erste Zählerschaltung 14 die Anzahl der von dem Empfangselement 11 empfangenen Pulse.

Ferner umfaßt die Erfassungseinrichtung 12 eine zweite Zählerschaltung 15, die die während des Durchlaufes eines Referenzwinkels S₁ von der ersten Pulssignalquelle 13 abgegebenen Pulse zählt. Wie erwähnt, kann der Referenzwinkel α_{R} eine frei wählbare Größe haben. Der Referenzwinkel α_{R} wird bei dem Ausführungsbeispiel gemäß Fig. 1 und 2 dadurch erfaßt, daß der zweite Zähler jeweils den Zählwert abgibt, der bei einem Zyklus des von dem Empfangselement 11 erfaßten periodischen Pulssignales in der zweiten Zählerschaltung 15 vorliegt. Das Zählerauslesen und das Rücksetzen der Zählerschaltung kann beispielsweise jeweils mit dem ersten Puls einer Pulssequenz des empfangenen Pulssignales erfolgen.

In Abweichung von dem beschriebenen Ausführungsbeispiel kann die Durchlaufzeit des Referenzwinkels α_{R} durch die zweite Zählerschaltung 15 auch dadurch erfaßt werden, daß diese von einer zweiten Pulssignalquelle mit Zählpulsen versorgt wird.

Den beiden Zählerschaltungen 14, 15 ist eine Quotientenbildungseinheit 16 nachgeschaltet, die aus dem Quotienten des ersten Zählerstandes der ersten Zählerschaltung 14 zu dem zweiten Zählerstand der zweiten Zählerschaltung 15 die Meßgröße, die bei dem Ausführungsbeispiel gemäß Fig. 1 dem Luftdruck entspricht, errechnet.

Für den Fachmann ist es offensichtlich, daß die beiden Zählerschaltungen 14, 15 sowie die Quotientenbildungseinheit 16 durch einen Mikroprozessor implementiert werden können.

Der Quotientenbildungseinheit 16 ist eine Anzeigeeinheit 17 nachgeschaltet, auf der die erfaßte Meßgröße, die bei dem Ausführungsbeispiel gemäß Fig. 1 der Reifenluftdruck ist, zur Anzeige gebracht wird.

Aus der obigen Beschreibung ist es ersichtlich, daß das erfindungsgemäße Konzept der Meßgrößenerfassung zunächst die Umsetzung einer beliebigen physikalischen Größe in einem mit einem Sensor erfaßbare Drehwinkelgröße erfordert, die bei dem gezeigten Ausführungsbeispiel durch die Hubstellung des Druckmeßkolbens 2 gebildet wird. Diese Drehwinkelgröße wird in ein erstes Zeitsignal transformiert, das bei dem gezeigten Ausführungsbeispiel abhängig von der Drehzahl und dem Meßwinkel α_{M} ist. Ein zweites Zeitsignal stellt die Zeitdauer dar, während der eine Relativdrehung α_{R} zwischen der Welle und der Sensoreinrichtung 10, 11 über einen Referenzwinkel stattfindet. Dieses zweite Zeitsignal entspricht dem zweiten Zählerstand. Die Quotientenbildung dieser beiden digital erfaßten Größen ergibt einen Wert, der die Meßgröße darstellt.

Für die Bildung des ersten Zählerstandes ist es nicht zwingend, daß das Sendeelement 10 mit dem von der ersten Pulssignalquelle erzeugten Pulssignal beaufschlagt wird. Ebenfalls ist es denkbar, das erste Sendeelement 10 kontinuierlich senden zu lassen, so daß das Empfangselement 11 bei Erfassung des Meßwinkels α_{M} ein "Hoch"-Signal kontinuierlich abgibt, mit dem ein (nicht dargestelltes) Tor auf- und zugesteuert wird, über das das Pulssignal von der ersten Pulssignalquelle 13 direkt der ersten Zählerschaltung 14 zugeführt wird.

Die in Fig. 1 gezeigte Anwendung des erfindungsgemäßen Prinzipes zur Auswertung von auf einer drehbaren Welle erfaßten Meßgröße bei der Luftdruckmessung an einem Fahrzeugrad 3 ist, wie es für den Fachmann offenkundig ist, keineswegs beschränkend. Das erfindungsgemäße Prinzip ist für die Auswertung jeder auf einer drehbaren Welle erfaßten Meßgröße geeignet, die sich in eine Drehwinkelgröße α_{M} umformen läßt.

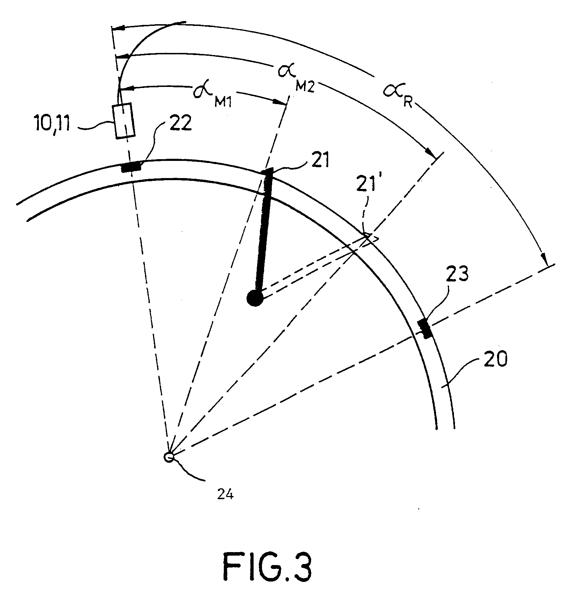

Ein Anwendungsbeispiel des erfinduncsgemäßen Prinzipes, bei dem eine andere Meßgröße auf einer drehbaren Welle erfaßt wird, wird nachfolgend unter Bezugnahme auf Fig. 3 beschrieben. Hier ist schematisch ein Teil einer Fahrzeugbremstrommel 20 gezeigt, die um die Achse ihrer Nabe 24 drehbar angeordnet ist. Die hier interessierende Meßgröße ist die Temperatur der Fahrzeugbremstrommel 20, die mittels einer Bimetallfeder 21 in eine Drehwinkelgröße umgesetzt wird. Die Bimetallfeder 21 ist mit einer durchgezogenen Linie in einer ersten Lage dargestellt, die einer ersten Bremstrommeltemperatur entspricht, und mittels einer gestrichelten Linie in einer zweiten Lage dargestellt, die einer zweiten Bremstrommeltemperatur entspricht. In ihrer zweiten Lage ist die Bimetallfeder mit dem Bezugszeichen 21' bezeichnet.

An der Bremstrommel sind ferner optisch erfaßbare Marken 22, 23 angebracht. Mittels eines Sende- und Empfangselementes 10, 11 kann nun ein der ersten Temperatur entsprechender erster Meßwinkel α_{M1} zwischen der ersten Marke 22 und der Bimetallfeder 21 in ihrer ersten Lage, ein der zweiten Temperatur entsprechender Meßwinkel α_{M2} zwischen der ersten Marke 22 und der Bimetallfeder 21' in ihrer zweiten Lage sowie ein Referenzwinkel α_{R} zwischen den beiden Marken 22, 23 erfaßt werden.

Die Auswertungseinrichtung kann auch in diesem Fall die in Fig. 2 gezeigte Struktur haben.

Die erfindungsgemäße Auswertungseinrichtung für eine auf einer drehbaren Welle erfaßte Meßgröße ermöglicht eine Messung mit einer Auflösung, die je nach der Frequenz der Erstpulssignalquelle und der Zählkapazität der verwendeten Zählerschaltungen praktisch beliebig hoch gewählt werden kann. Die erfindungsgemäße Auswertungseinrichtung arbeitet berührungslos und somit vollständig verschleißfrei.

Ferner arbeitet die erfindungsgemäße Auswertungseinrichtung gleichermaßen gut bei praktisch beliebig hohen oder niedrigen Drehzahlen der drehbaren Welle.

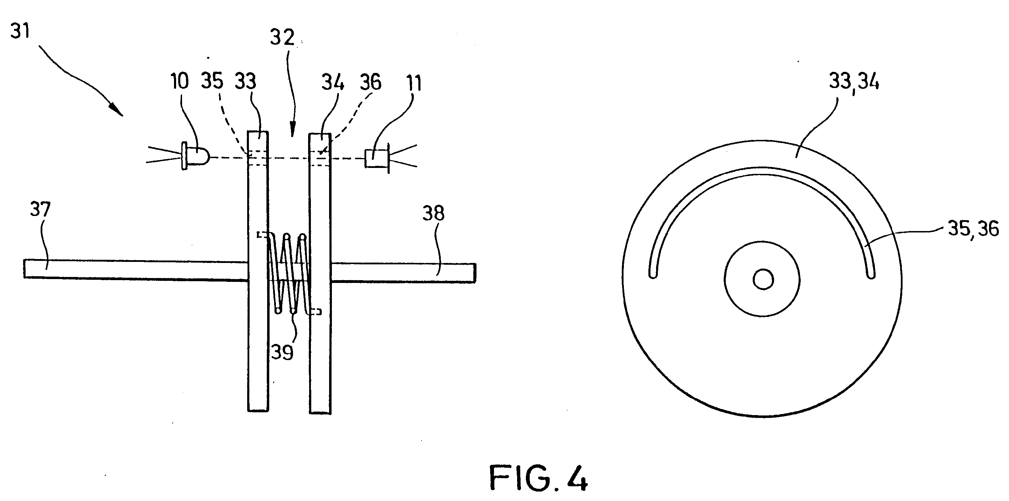

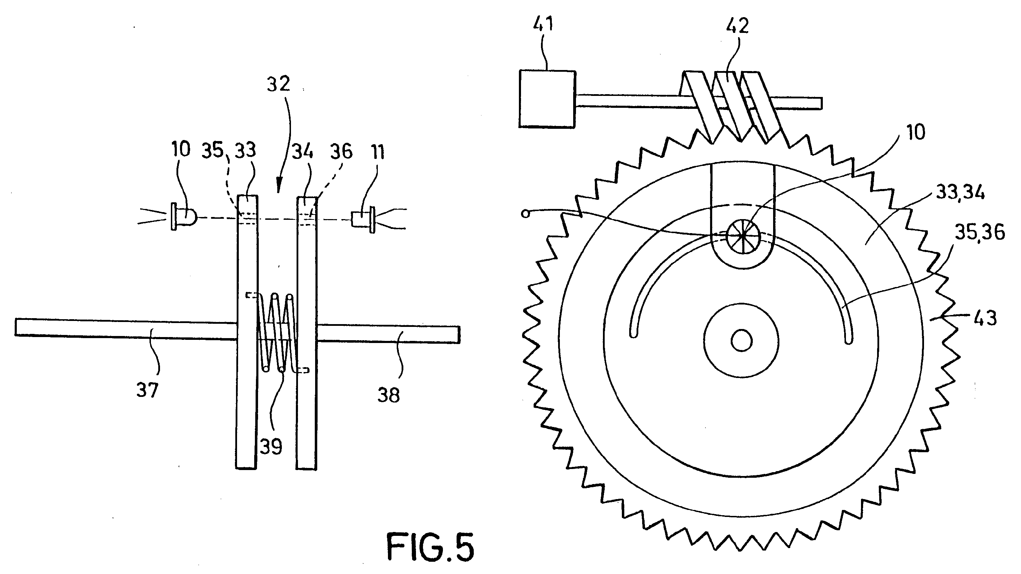

Nachfolgend werden unter Bezugnahme auf die Fig. 4 und 5 Drehmomenterfassungseinrichtungen nach der Erfindung erläutert.

Wie in Fig. 4 dargestellt ist, umfaßt eine Drehmomenterfassungseinrichtung, die in ihrer Gesamtheit mit dem Bezugszeichen 31 dargestellt ist, eine Drehwinkelumformeinrichtung 32, welche zwei Scheiben 33, 34 umfaßt. Jede der Scheiben 33, 34 kann die in der rechtsseitigen Darstellung gemäß Fig. 4 gezeigte Gestalt haben und jeweils zumindest ein Kreisbogenfenster 35, 36 umfassen. Die erste Scheibe 33 der Drehwinkelumformeinrichtung 32 steht mit einem eingangsseitigen Wellenelement 37 in Verbindung, während die zweite Scheibe 34 an einem ausgangsseitigen Wellenelement 38 angebracht ist. Bei einem der möglichen Anwendungsbereiche der vorliegenden Erfindung, welcher die Drehmomentmessung bei sich drehenden Wellen betrifft, ist das eingangsseitige Wellenelement 37 ein Antriebselement, während das ausgangsseitige Wellenelement 38 ein Abtriebselement bildet.

Zwischen den beiden Wellenelementen 37, 38 liegt eine diese beiden Elemente dreheleastisch verbindende Einrichtung 39, die bei der gezeigten Ausführungsform die Gestalt einer Feder hat. In Axialrichtung liegen einander im Bereich der Kreisbogenfenster 35, 36 ein Sendeelement 10 und ein Empfangselement 11 gegenüber. Bei der gezeigten Ausführungsform ist das Sendeelement 10 ein elektrooptisches Sendeelement in Form einer Leuchtdiode. Bei dieser Ausgestaltung der Erfindung ist das Empfangselement 11 ein optoelektrisches Empfangselement in Form eines Phototransistors. Diese Elemente dienen als Sensoreinrichtung zur Abgabe eines Signales, das anzeigt, ob oder ob nicht zwischen dem Sendeelement 10 und dem Empfangselement 11 eine Signalübertragung stattfindet. Eine Signalübertragung findet statt, wenn das durch die beiden Kreisbogenfenster 35, 36 gebildete Fenster, dessen Winkellänge von dem anliegenden Drehmoment abhängt, sich zwischen den Elementen 10, 11 befindet.

Das Sendeelement 10 sowie das Empfangselement 11 können jedoch in Abweichung von dem soeben beschriebenen Beispiel auch zur Übertragung magnetischer oder elektischer Signale ausgestaltet sein.

Die Drehmomenterfassungseinrichtung hat eine an das Sendeelement 10 sowie an das Empfangselement 11 angeschlossene Erfassungs- und Auswertungseinrichtung 12, wie sie unter Bezugnahme auf Fig. 2 beschrieben wurde.

Die Quotientenbildungseinheit 16 errechnet aus dem Quotienten des ersten Zählerstandes der ersten Zählerschaltung 14 zu dem zweiten Zählerstand der zweiten Zählerschaltung 15 das momentane Drehmoment, das zwischen den Wellenelementen 37, 38 übertragen wird.

Der Quotientenbildungseinheit 16 ist eine Anzeigeeinheit 17 nachgeschaltet, die in einem ersten Anzeigeteil 18 das ermittelte Drehmoment anzeigt. Mit Hilfe des zweiten Zählerstandes, der umgekehrt proportional zur Drehzahl ist, kann der die Quotientenbildungseinheit 16 umfassende Mikroprozessor 16 somit auch die Drehzahl ermitteln, die auf einem zweiten Anzeigeteil der Anzeigeeinheit 17 angezeigt wird, sowie durch Multiplikation der Drehzahl und des Drehmomentes die Leistung errechnen, die in einem dritten Anzeigeteil angezeigt wird.

Aus der obigen Beschreibung ist es ersichtlich, daß das erfindungsgemäße Konzept der Drehmomenterfassung zunächst die Umsetzung des Drehmomentes in eine mit einem Sensor erfaßbare Drehwinkelgröße erfordert, die bei dem gezeigten Ausführungsbeispiel dem durch die beiden Kreisbogenfenster 35, 36 aufgrund ihrer Relativdrehung festgelegten Fensterbereich entspricht. Diese Drehwinkelgröße wird in ein erstes Zeitsignal transformiert, das bei dem gezeigten Ausführungsbeispiel dem ersten Zählerstand entspricht. Ein zweites Zeitsignal stellt die Zeitdauer dar, während der eine Relativdrehung zwischen der Welle und der Sensoreinrichtung 10, 11 über einen Referenzwinkel stattfindet. Dieses zweite Zeitsignal entspricht dem zweiten Zählerstand. Die Quotientenbildung dieser beiden digital erfaßten Größen ergibt das Drehmoment.

Bei der unter Bezugnahme auf Fig. 4 beschriebenen Ausführungsform ist die Sensoreinrichtung 10, 11 feststehend, während sich die Wellenelemente 37, 38 drehen.

Wie aus der nachfolgenden Beschreibung unter Bezugnahme auf Fig. 5 verdeutlicht wird, ist die erfindungsgemäße Drehmomenterfassungseinrichtung jedoch auch für solche Anwendungsfälle einsetzbar, bei denen es um die Erfassung des an einer stillstehenden Welle anliegenden Drehmomentes geht. In diesem Fall wird die Sensoreinrichtung 10 mit einer Antriebseinrichtung in Drehrichtung um einen Referenzwinkel um die Welle gedreht. Die Antriebseinrichtung ist bei dieser Ausführungsform gemäß Fig. 5 versinnbildlicht durch einen Motor 41 zum Antreiben einer Schnecke 42, mit der ein Zahnkranz 43 um die Achse der Welle bewegt wird, an dem die Sensoreinrichtung 10, 11 geführt wird. Die Bildung des ersten Zählerstandes erfolgt ebenso wie bei dem unter Bezugnahme auf Fig. 4 beschriebenen Ausführungsbeispiel. Die Bildung des zweiten Zählerstandes, welcher die Pulszahl oder Zeit während des Durchlaufes des Referenzwinkels betrifft, kann bei dieser Ausgestaltung beispielsweise dadurch erfolgen, daß während der Zeitdauer des Antreibens des Motors 41 ein Gatter zwischen der Pulssignalquelle 13 und der zweiten Zählerschaltung 15 aufgesteuert wird.

Für den Fachmann ist es offensichtlich, daß der in der vorliegenden Beschreibung verwendete Begriff der elastischen Verbindungsvorrichtung zwischen zwei Wellenelementen die Anwendung von in sich elastischen Wellen umfaßt, deren Wellenenden die Wellenelemente bilden und deren Hauptteil die elastische Verbindungsvorrichtung darstellt.

Ferner ist es möglich, die Sensoreinrichtung durch getrennte Sensorelemente für die erste und die zweite Zählerschaltung zu realisieren. In diesem Fall können die Sensorelemente an voneinander beabstandeten Orten der Welle vorgesehen sein.

Die erfindungsgemäße Drehmomenterfassungseinrichtung ermöglicht die Drehmomenterfassung mit einer Auflösung, die je nach Frequenz der ersten Pulssignalquelle und Zählkapazität der verwendeten Zähler praktisch beliebig hoch gewählt werden kann. Die erfindungsgemäße Drehmomenterfassungseinrichtung arbeitet berührungslos und erfordert keine Dehnungsmeßstreifen oder sonstige analoge Sensoren, da das erfindungsgemäße Meßprinzip vollständig digital ist.

Die erfindungsgemäße Drehmomenterfassungseinrichtung kann bei allen Motoren, Antrieben und Getrieben eingesetzt werden. Die erfindungsgemäße Drehmomenterfassungseinrichtung ist ausgesprochen einfach aufgebaut und ermöglicht dennoch eine hohe Meßgenauigkeit.

Unter den in der vorliegenden Anmeldung verwendeten Begriff "drehbare Welle" sollen sämtliche Strukturen fallen, die eine Relativdrehung des Ortes der zu erfassenden Meßgröße gegenüber dem Ort der Auswertungseinrichtung ermöglichen.

## Patentansprüche

1. Auswertungseinrichtung für eine auf einer drehbaren Welle erfaßte Meßgröße,
mit einer Drehwinkelumformeinrichtung (2 - 6; 21 - 23) zur Umformung der erfaßten Meßgröße in eine von dieser abhängige Drehwinkelgröße (α_{M}), und
mit einer Erfassungseinrichtung (12) für die Drehwinkelgröße, die eine erste Zählerschaltung (14) und eine relativ zu der Drehwinkelumformeinrichtung (2 - 6; 21 - 23) drehbare Sensoreinrichtung (10, 11) umfaßt, die die Drehwinkelgröße erfaßt und die aus dieser die Meßgröße ableitet, wobei die Erfassungseinrichtung eine erste Pulssignalquelle (13) umfaßt, und
die Sensoreinrichtung (10, 11) derart ausgebildet ist, daß sie die erste Zählerschaltung (14) zum Zählen der von der ersten Pulssignalquelle (13) abgegebenen Pulse während einer Zeitdauer veranlaßt, während der eine Relativdrehung der Sensoreinrichtung (10, 11) zu der Drehwinkelumformeinrichtung (2 - 6; 21 - 23) über die der Meßgröße entsprechende Drehwinkelgröße (α_{M}) stattfindet,
dadurch gekennzeichnet,
daß die Erfassungseinrichtung eine zweite Zählerschaltung (15) aufweist, die die von der ersten oder einer zweiten Pulssignalquelle (13) während einer Referenzzeit abgegebenen Pulse zählt, wobei die Referenzzeit diejenige Zeit ist, während der eine Relativdrehung der Sensoreinrichtung (10, 11) zu der Drehwinkelumformeinrichtung (2 - 6; 21 - 23) über einen Referenzwinkel (α_{R}) stattfindet, und
daß die Erfassungseinrichtung (12) die Meßgröße aus dem Quotienten des ersten Zählerstandes zu dem zweiten Zählerstand ableitet.

2. Drehmomenterfassungseinrichtung zur Ermittlung des zwischen einem eingangsseitigen Wellenelement (37) und einem ausgangsseitigen Wellenelement (38) übertragenen Drehmomentes,
mit einer elastischen Verbindungsvorrichtung (39) zwischen den Wellenelementen (37, 38), die eine von dem übertragenen Drehmoment abhängige relative Winkelauslenkung der Wellenelemente (37, 38) gestattet,
mit einer mit den beiden Wellenelementen (37, 38) verbundenen Drehwinkelumformeinrichtung (32) zur Erzeugung einer von der Winkelauslenkung der Wellenelemente (37, 38) abhängigen erfaßbären Drehwinkelgröße, und
mit einer Erfassungs- und Auswertungseinrichtung (12) für die Drehwinkelgröße, die eine erste Zählerschaltung (14) und eine relativ zu der Drehwinkelumformeinrichtung (32) drehbare Sensoreinrichtung (10, 11) umfaßt, die die Drehwinkelgröße erfaßt und die aus dieser das Drehmoment ableitet, wobei die Erfassungsund Auswertungseinrichtung eine erste Pulssignalquelle (13) umfaßt, und
die Sensoreinrichtung (10, 11) derart ausgebildet ist, daß sie die erste Zählerschaltung (14) zum Zählen der von der ersten Pulssignalquelle (13) abgegebenen Pulse während einer Zeitdauer veranlaßt, während der eine Relativdrehung der Sensoreinrichtung (10, 11) zu der Drehwinkelumformeinrichtung (32) über die dem Drehmoment entsprechende Drehwinkelgröße (α_{M}) stattfindet,
dadurch gekennzeichnet,
daß die Erfassungs- und Auswertungseinrichtung eine zweite Zählerschaltung (15) aufweist, die die von der ersten oder einer zweiten Pulssignalquelle (13) während einer Referenzzeit abgegebenen Pulse zählt, wobei die Referenzzeit diejenige Zeit ist, während der eine Relativdrehung der Sensoreinrichtung (10, 11) zu der Drehwinkelumformeinrichtung (32) über einen Referenzwinkel stattfindet, und
daß die Erfassungs- und Auswertungseinrichtung (12) das Drehmoment aus dem Quotienten des ersten Zählerstandes zu dem zweiten Zählerstand ableitet.

3. Einrichtung nach Anspruch 1 oder 2, dadurch gekennzeichnet,
daß die erste Pulssignalquelle (13) mit einem Sendeelement (10) der Sensoreinrichtung (10, 11) verbunden ist,
daß die Sensoreinrichtung (10, 11) ferner ein Empfangselement (11) umfaßt,
daß die erste Zählerschaltung (14) dem Empfangselement (11) nachgeschaltet ist, und
daß das Sendeelement (10), das Empfangselement (11) und die Drehwinkelumformeinrichtung (2 - 6; 21 - 23, 32) derart angeordnet sind, daß eine Pulsübertragung von dem Sendeelement (10) zu dem Empfangselement (11) nur stattfinden kann, wenn die momentane relative Drehlage des Empfangselementes (11) bezüglich der Drehwinkelumformeinrichtung (2 - 6; 21 - 23; 32) innerhalb der Drehwinkelgröße (α_{M}) liegt.

4. Einrichtung nach Anspruch 1 oder 2, dadurch gekennzeichnet,
daß der Sensorsoreinrichtung (10, 11) eine Torschaltung nachgeschaltet ist, die zwischen der ersten Pulssignalquelle (13) und der ersten Zählerschaltung (14) liegt und diese verbindet, während die Relativdrehung der Sensoreinrichtung (10, 11) zu der Drehwinkelumformeinrichtung (2 - 6; 21 - 23; 32) über die der Meßgröße bzw. dem Drehmoment entsprechende Drehwinkelgröße (α_{M}) stattfindet.

5. Einrichtung nach einem der Ansprüche 1, 3 oder 4, dadurch gekennzeichnet,
daß die Drehwinkelumformeinrichtung eine Einrichtung (21) zur Umsetzung der Temperatur in einen Winkel auf der Welle umfaßt.

6. Einrichtung nach Anspruch 5, dadurch gekennzeichnet,
daß die Temperaturumsetzungseinrichtung eine Bimetallfeder (21) aufweist.

7. Einrichtung nach einem der Ansprüche 1, 3 oder 4, dadurch gekennzeichnet,
daß die Drehwinkelumformeinrichtung eine Einrichtung (2 - 6) zur Umsetzung eines Reifenluftdruckes in einen Winkel auf einem Fahrzeugrad (3) umfaßt.

8. Einrichtung nach Anspruch 7, dadurch gekennzeichnet,
daß die Reifenluftdruckumsetzungseinrichtung einen tangential zu dem Reifen (4), dessen Luftdruck zu messen ist, angeordneten Druckmeßkolben (2) umfaßt.

9. Einrichtung nach einem der Ansprüche 2 bis 4, dadurch gekennzeichnet,
daß die Drehwinkelumformeinrichtung zwei Scheiben (33, 34) umfaßt, von denen je eine mit je einem Wellenelement (37, 38) verbunden ist und die miteinander ein Fenster (35, 36) festlegen, dessen Winkel die die Winkelauslenkung der Wellenelemente (37, 38) darstellende Drehwinkelgröße ist.

## Claims

1. An evaluation means used for evaluating a measured quantity detected at a rotatable shaft and comprising
a rotational angle transducer (2 - 6; 21 - 23) for transducing the detected measured quantity into a rotational angle quantity (α_{M}) depending on said measured quantity, and
a detection means (12) for the rotational angle quantity including a first counting circuit (14) and a sensor means (10, 11), which is adapted to be rotated relative to said rotational angle transducer (2 - 6; 21 - 23) and which detects the rotational angle quantity and derives therefrom the measured quantity,
characterized in
that the detection means includes a first pulse signal source (13),
that the sensor means (10, 11) is constructed such that it causes the first counting circuit (14) to count the pulses supplied by the first pulse signal source (13) during a period of time in the course of which said sensor means (10, 11) detects the rotational angle quantity (α_{M}) while carrying out its movement relative to the rotational angle transducer (2- 6; 21 - 23),
that the detection means includes a second counting circuit (15) counting the pulses supplied by said first or by a second pulse signal source (13) during a reference period, said reference period being the time in the course of which a rotation of the sensor means (10, 11) relative to the rotational angle transducer (2 - 6; 21 - 23) takes place through a reference angle (α_{R}), and
that the detection means (12) derives the measured quantity from the quotient of the first count to the second count.

2. A torque detection means used for determining the torque transmitted between an input-side shaft element (37) and an output-side shaft element (38) and comprising
an elastic connection means (39), which is disposed between said shaft elements (37, 38) and which permits a relative angular deflection of said shaft elements (37, 38) depending on the torque transmitted,
a rotational angle transducer (32) connected to both shaft elements (37, 38) and used for producing a detectable rotational angle quantity depending on the angular deflection of said shaft elements (37, 38), and
an evaluation and detection means (12) for said rotatinal angle quantity including a first counting circuit (14) and a sensor means (10, 11), which is adapted to be rotated relative to the rotational angle transducer (32) and which detects the rotational angle quantity and derives therefrom the torque,
characterized in
that the detection and evaluation means includes a first pulse signal source (13),
that the sensor means (10, 11) is constructed such that it causes the first counting circuit (14) to count the pulses supplied by the first pulse signal source (13) during a period of time in the course of which said sensor means (10, 11) detects the rotational angle quantity while carrying out its movement relative to the rotational angle transducer (32),
that the detection and evaluation means includes a second counting circuit (15) counting the pulses supplied by said first or by a second pulse signal source (13) during a reference period, said reference period being the time in the course of which a rotation of said sensor means (10, 11) relative to the rotational angle transducer (32) takes place through a reference angle, and
that the detection and evaluation means (12) derives the torque from the quotient of the first count to the second count.

3. A means according to claim 1 or 2, characterized in
that the first pulse signal source (13) is connected to a transmitting element (10) of the sensor means (10, 11),
that the sensor means (10, 11) additionally comprises a receiving element (11),
that the first counting circuit (14) is connected downstream of said receiving element (11), and
that the transmitting element (10), the receiving element (11) and the rotational angle transducer (2 - 6; 21 - 23, 32) are arranged such that a transmission of pulses from the transmitting element (10) to the receiving element (11) can only take place, if the instantaneous rotational position of the receiving element (11) relative to the rotational angle transducer (2 - 6; 21 - 23; 32) lies within the rotational angle quantity (α_{M} ).

4. A means according to claim 1 or 2, characterized in
that the sensor means (10, 11) is followed by a gate circuit, which is located between the first pulse signal source (13) and the first counting circuit (14) and which interconnects these components when the sensor means (10, 11) detects the rotational angle quantity (α_{M}).

5. A means according to one of the claims 1 to 4, characterized in
that the rotational angle transducer is a means (21) for converting the temperature into an angle on the shaft.

6. A means according to claim 5, characterized in
that the temperature conversion means comprises a bimetal spring (21).

7. A means according to one of the claims 1 to 4, characterized in
the rotational angle transducer comprises a means (2 - 6) for converting an inflation pressure into an angle on a vehicle wheel (3).

8. A means according to claim 7, characterized in
that the inflation pressure transducer comprises a pressure gauge piston (2), which is arranged tangentially to the tyre (4) whose inflation pressure is to be measured.

9. A means according to one of the claims 2 to 8, characterized in
that the rotational angle transducer comprises two discs (33, 34), each of said discs being connected to a respective shaft element (37, 38) and said discs defining in common a window (35, 36) whose angle is the rotational angle quantity which is representative of the angular deflection of said shaft elements (37, 38).

## Revendications

1. Dispositif d'évaluation pour une grandeur de mesure déterminée sur un arbre entraîné en rotation, comprenant
un dispositif de conversion d'angle de rotation (2 - 6; 21 - 23) pour convertir la grandeur de mesure déterminée en une grandeur d'angle de rotation (α_{M}) fonction de celle-ci, et
un dispositif de détermination (12) de la grandeur d'angle de rotation comportant un premier circuit compteur (14) et un dispositif détecteur (10, 11), pouvant tourner par rapport au dispositif de conversion d'angle de rotation (2 - 6; 21 - 23), qui détermine la grandeur d'angle de rotation et dérive de celle-ci la grandeur de mesure, le dispositif de détermination comportant une première source de signaux pulsés, et
le dispositif détecteur (10, 11) étant réalisé de telle manière qu'il provoque le comptage par le premier circuit compteur (14) des pulsations fournies par la première source de signaux pulsés (13) pendant un laps de temps pendant lequel a lieu une rotation réciproque du dispositif détecteur (10, 11) par rapport au dispositif de conversion d'angle de rotation (2 - 6; 21 - 23) sur la grandeur d'angle de rotation (α_{M}) correspondant à la grandeur de mesure,
caractérisé en ce
que le dispositif de détermination présente un second circuit compteur (15) qui compte les pulsations fournies par la première ou une seconde source de signaux pulsés (13) pendant un temps de référence, le temps de référence étant le temps pendant lequel a lieu une rotation réciproque du dispositif détecteur (10, 11) par rapport au dispositif de conversion d'angle de rotation (2 - 6; 21 - 23) sur un angle de référence (α_{R}), et
que le dispositif de détermination (12) dérive la grandeur de mesure du quotient de la première position de compteur par rapport à la seconde position de compteur.

2. Dispositif de détermination de couple destiné à déterminer le couple transmis entre un élément d'arbre côté entrée (37) et un élément d'arbre côté sortie (38), comprenant
un dispositif de liaison élastique (39) entre les éléments d'arbre (37, 38) qui permet un déplacement angulaire relatif des éléments d'arbre (37, 38) en fonction du couple transmis,
un dispositif de conversion d'angle de rotation (32), relié aux deux éléments d'arbre (37, 38), destiné à produire une grandeur d'angle de rotation déterminable fonction du déplacement angulaire des éléments d'arbre (37, 38), et
un dispositif de détermination et d'évaluation (12) de la grandeur d'angle de rotation, comportant un premier circuit compteur (14) et un dispositif détecteur (10, 11), pouvant tourner par rapport au dispositif de conversion d'angle de rotation (32), qui détermine la grandeur d'angle de rotation et dérive de celle-ci le couple, le dispositif de détermination et d'évaluation comportant une première source de signaux pulsés (13), et
le dispositif détecteur (10, 11) étant réalisé de telle manière qu'il provoque le comptage par le premier circuit compteur (14) des pulsations fournies par la première source de signaux pulsés (13) pendant un laps de temps pendant lequel a lieu une rotation réciproque du dispositif détecteur (10, 11) par rapport au dispositif de conversion d'angle de rotation (32) sur la grandeur d'angle de rotation (α_{M}) correspondant à la grandeur de mesure,
caractérisé en ce
que le dispositif de détermination et d'évaluation présente un second circuit compteur (15) qui compte les pulsations fournies par la première ou une seconde source de signaux pulsés (13) pendant un temps de référence, le temps de référence étant le temps pendant lequel a lieu une rotation réciproque du dispositif détecteur (10, 11) par rapport au dispositif de conversion d'angle de rotation (32) sur un angle de référence, et
que le dispositif de détermination et d'évaluation (12) dérive le couple du quotient de la première position de compteur par rapport à la seconde position de compteur.

3. Dispositif suivant la revendication 1 ou 2, caractérisé en ce
que la première source de signaux pulsés (13) est reliée à un élément émetteur (10) du dispositif détecteur (10, 11),
que le dispositif détecteur (10, 11) comporte, par ailleurs, un élément récepteur (11),
que le premier circuit compteur (14) est connecté après l'élément récepteur (11), et
que l'élément émetteur (10), l'élément récepteur (11) et le dispositif de conversion d'angle de rotation (2 - 6; 21 - 23, 32) sont disposés de telle manière qu'une transmission de pulsations de l'élément émetteur (10) à l'élément récepteur (11) ne peut avoir lieu que lorsque laposition de rotation relative momentanée de l'élément récepteur (11) par rapport au dispositif de conversion d'angle de rotation (2 - 6; 21 - 23, 32) se situe dans les limites de la grandeur d'angle de rotation (α_{M}).

4. Dispositif suivant la revendication 1 ou 2, caractérisé en ce qu'après le dispositif détecteur (10, 11) est connecté un circuit de porte qui se situe entre la première source de signaux pulsés (13) et le premier circuit compteur (14) et relie ceux-ci pendant qu'a lieu la rotation réciproque du dispositif détecteur (10, 11) par rapport au dispositif de conversion d'angle de rotation (2 - 6; 21 - 23, 32) sur la grandeur d'angle de rotation (α_{M}) correspondant à la grandeur de mesure, respectivement au couple.

5. Dispositif suivant l'une des revendications 1, 3 ou 4, caractérisé en ce que le dispositif de conversion d'angle de rotation comprend un dispositif (21) destiné à convertir la température en un angle sur l'arbre.

6. Dispositif suivant la revendication 5, caractérisé en ce que le dispositif de conversion de température présente un ressort bimétallique (21).

7. Dispositif suivant l'une des revendications 1, 3 ou 4, caractérisé en ce que le dispositif de conversion d'angle de rotation comprend un dispositif (2 - 6) destiné à convertir une pression d'air de pneu en un angle sur une roue de véhicule (3).

8. Dispositif suivant la revendication 7, caractérisé en ce que le dispositif de conversion de pression d'air de pneu comporte un piston de mesure de pression (2) disposé tangentiellement au pneu (4) dont il y a lieu de mesurer la pression d'air.

9. Dispositif suivant l'une des revendications 2 à 4, caractérisé en ce que le dispositif de conversion d'angle de rotation comporte deux disques (33, 34). chacun d'eux étant relié à l'un des éléments d'arbre (37, 38), qui déterminent ensemble une fenêtre (35, 36) dont l'angle est la grandeur d'angle de rotation représentant le déplacement angulaire des éléments d'arbre (37, 38).
